(19) Europäisches Patentamt
European Patent Office
Office européen des brevets

(11) Veröffentlichungsnummer: **0 334 057 A2**

(12) **EUROPÄISCHE PATENTANMELDUNG**

(21) Anmeldenummer: 89103495.1

(51) Int. Cl.⁴: **A23C 11/10 , A23L 1/211**

(22) Anmeldetag: 28.02.89

(30) Priorität: 05.03.88 DE 3807328

(43) Veröffentlichungstag der Anmeldung:
27.09.89 Patentblatt 89/39

(84) Benannte Vertragsstaaten:
**BE ES FR GB GR IT LU NL**

(71) Anmelder: **POLAR-FROST-EISKREM-KÜHLKO-ST OTTO MISCHO GmbH & Co KG**
**Seibelstrasse 36**
**D-4020 Mettmann 1(DE)**

(72) Erfinder: **Der Erfinder hat auf seine Nennung verzichtet**

(74) Vertreter: **Kort, Peter H.**
**Kaiserswerther Strasse 239**
**D-4000 Düsseldorf 30(DE)**

(54) Verfahren zur Herstellung von Sojamilch.

(57) Verfahren zur Herstellung von proteinreicher Sojamilch mittels Blanchierens von Sojabohnen beliebiger Gestalt und ihrer Überführung in eine alkalische Natriumbikarbonat enthaltende Wasserlösung, wobei die erhaltene Mischung zu einer Aufschlämmung vermahlen wird.

Nach anschließender Entgasung und Erwärmung erfolgt eine Feinzerkleinerung der in der Aufschlämmung enthaltenen Sojabohnenpartikel, um die Aufschlämmung zu filtrieren und bei konstanter Trokkenstoffkonzentration innerhalb der Sojamilch in Sojamilch und Feststoffe zu separieren.

EP 0 334 057 A2

## Verfahren zur Herstellung von Sojamilch

Die Erfindung betrifft ein mehrstufiges Verfahren zur Herstellung von Sojamilch aus ungebrochenen, gebrochenen, geschälten oder ungebrochenen Sojabohnen.

Die Erfindung hat sich die Aufgabe gestellt, eine proteinreiche Sojamilch geringen Gehalts an Oligosacchariden herzustellen, die bitterstoffrei, weitgehend geruchs- und geschmacksneutral ist, eine glatte vollmundige Textur und für das enthaltene Protein eine maximale Löslichkeit bei ausreichender Inaktivierung des Trypsininhibitors aufweist.

Erfindungsgemäß wird diese Aufgabe in folgenden Schritten gelöst:

Sojabohnen vorbezeichneter Art werden in Trinkwasser in einem Mischungsverhältnis der Gewichte von eins für Sojabohnen zu zwei bis zehn für Trinkwasser bei Temperaturen zwischen neunzig und einhundert Grad Celsius über einen Zeitraum bis zu dreihundert Sekunden blanchiert.

Nach Abtrennung des verwendeten Trinkwassers werden die blanchierten Sojabohnen in eine alkalische Natriumbikarbonat enthaltene Wasserlösung mit einer Temperatur zwischen neunzig und einhundert Grad übergeführt, wobei das Mischungsverhältnis der Gewichte eins für die blanchierten Sojabohnen zu zwei bis zwölf für die alkalische Wasserlösung beträgt.

Diese Mischung wird zu einer Dispersion bei einer Temperatur von mehr als neunzig Grad Celsius in herkömmlichen Vorrichtungen, zum Beispiel Hammermühlen, Lochscheibenmühlen oder Zahnkolloidmühlen, ein- oder mehrstufig vermahlen, wobei die entstehenden Teilchen einen Durchmesser bis zu einem halben Millimeter aufweisen und die Temperatur von mehr als neunzig Grad Celsius eine halbe bis fünf Minuten konstant gehalten wird. Der Anteil der Trockenmasse in der Dispersion liegt zwischen zehn und sechzehn Teilen vom Hundert.

Danach wird die in einem geschlossenen Behälter befindliche Dispersion durch Erzeugung eines Unterdrucks bei einer Temperatur ab neunzig Grad Celsius entgast und danach auf direktem Wege auf eine Temperatur zwischen einhundertzwanzig und einhundertfünfzig Grad Celsius erwärmt. Die Erwärmung geschieht durch die unmittelbare Zuführung von injiziertem Wasserdampf oder Infusion der Dispersion in einer mit Wasserdampf gefüllten Dampfkammer. Hiedruch wird der alkalische pH-Wert der Dispersion gemildert.

Die so behandelte Dispersion wird über einen Zeitraum zwischen fünf und einhundertachtzig Sekunden auf der erreichten Temperatur zwischen einhundertzwanzig und einhundertfünfzig Grad Celsius gehalten.

Dem schließt sich eine Entspannung und Entgasung durch Anlegen eines Unterdrucks bei gleichzeitiger Abkühlung der Dispersion auf eine Temperatur zwischen neunzig und sechzig Grad Celsius an.

Sodann wird der Dispersion eine Genußsäure zugeführt.

Die in der aufgeschlemmten Dispersion enthaltenen Sojabohnenpartikel werden zu einer maximalen Teilchengröße vom zweihundert Mikrometer mittels einer Kugelmühle oder einer Homogenisiermaschine zu einer homogenen Suspension zerkleinert. Bei Verwendung einer Homogenisiermaschine geschieht dies einstufig unter einem Druck zwischen fünfzig und fünfhundert bar.

Diese Suspension wird sodann einer Diafiltrationsbehand lung unterzogen, indem sie durch eine Filtermembran geführt wird, wobei Permeat abgeleitet wird und die Menge des abfließenden Permeats durch eine gleiche Menge Trinkwasser ersetzt wird. Das Permeat enthält zehn bis neunzig vom Hundert der in der Suspension vorhandenen löslichen Kohlenhydrate, insbesondere Flatulenz erzeugende Oligosaccharide, Mineralstoffe und Spuren von Fett und Proteinen.

Hierbei stellt sich eine konstante Trockenstoffkonzentration mit einem Proteingehalt von mindestens fünfzig vom Hundert in der um das entfernte Permeat entlasteten Suspension ein.

Die Suspension wird sodann in einem Klärseparator oder Filter in Sojamilch mit einem Gehalt zwischen drei und dreißig Volumenprozenten Restsedimenten mit besonders vorteilhafter, nämlich glatter und vollmundiger mit der Wirkung von Binde- oder Verdickungsmitteln vergleichbarer Textur und Feststoffe (Okara) getrennt, wobei in der Sojamilch eine Teilchengröße von maximal zehn Mikrometer und in den Feststoffen von maximal zweihundert Mikrometer erzielt wird.

Anschließend erfolgt die Abkühlung der Sojamilch und Feststoffe auf eine Temperatur unter zehn Grad Celsius.

Die abgetrennten Feststoffe können in einer Kugelmühle auf eine Teilchengröße zwischen zwanzig und zweihundert Mikrometer zerkleinert und der geklärten Sojamilch in Gewichtsanteilen von fünf bis fünfzig vom Hundert zugeführt werden.

Die so homogenisierten Faserstoffe erlauben wegen des möglichen Partikelgrößenspektrums einen vielfältigen Einsatz bei der Herstellung von Nahrungsmitteln beliebiger Art.

Es ist auch möglich, ausschließlich die Sojamilch einem Diafiltrationsprozeß zu unterwerfen, in dem der Klärungsprozeß im Anschluß an die Feinstzerkleinerung der aufgeschlemmten Dispersion durchgeführt wird.

In einer weiteren Ausführungsform des Verfahrens wird die feinstzerkleinerte Sojabohnenaufschlämmung in einem Klärseparator oder Filter in Sojamilch mit einem Gehalt von maximal drei Volumenprozenten Restsediment und Feststoffe getrennt, wobei in der Sojamilch eine Teilchengröße von maximal 10 Mikrometer und in den Feststoffen von maximal zweihundert Mikrometer erzielt wird.

Die so gewonnene Sojamilch wird sodann einer Diafiltrationsbehandlung unterzogen ; das abfließende Permeat wird zur Verdünnung der Feststoffe eingesetzt.

Die Feststoff-Permeat-Mischung wird dann in einem Klärseparator oder Filter in separiertes Permeat und Feststoffe getrennt.

Die gewaschene und geklärte Sojamilch wird zurückgeführt und zusammen mit Sojabohnen und der alkalischen wässrigen Lösung vermahlen.

Die Sojamilch aus dem ersten Separierungsschritt kann noch einer Aufkonzentrierung, beispielsweise durch Eindampfen unterzogen werden.

Diesem Sojamilchkonzentrat kann der bei dem zweiten Separierungsschritt gewonnene Feststoff in Mengen bis zu fünfzig Gewichtsprozent zudosiert werden.

Auf diese Weise läßt sich ein Sojamilchkonzentrat hoher Trockenstoffkonzentration herstellen, das beispielsweise zu einem Sojamilchpulver weiterverarbeitet werden kann.

Ausführungsbeispiel 1:

Ganze, ungeschälte Sojabohnen werden mittels einer Dosierschnecke steigend in einen Dosiertrichter gefördert. Im Gegenstrom wird Wasser von fünfundneunzig Grad Cel sius durch den Förderkanal gepumpt. Es ergibt sich eine Verweildauer von einer halben Minute in der Blanchiervorrichtung. Durch das Blanchieren ergeben sich vorteilhafte Auswirkungen auf das Endprodukt, in dem durch eine begrenzte Wasseraufnahme eine bestimmte Weichheit hergestellt wird und die Sojabohnen damit für den nachfolgenden Mahlprozeß vorbereitet werden; außerdem beugt man offenbar damit bereits dem Entstehen von Bitterstoffen vor. Das Wasser: Sojabohnenverhältnis beträgt sechs Gewichtsteile Wasser zu einem Teil Sojabohnen.

Die blanchierten Sojabohnen werden daraufhin aus dem Trichter in eine vorbereitete halbprozentige heiße Natriumbicarbonatlösung im Gewichtsverhältnis eins zu sechs dosiert und im unmittelbaren Anschluß daran zunächst mittels einer Zahnkolloidmühle zu einer Dispersion feinzerkleinert. Die Temperatur der Dispersion beträgt direkt nach dem Mahlen neunzig Grad Celsius und wird für ca. zwei Minuten gehalten.

Anschließend erfolgt eine Entgasung in einem Unterdruckgefäß, dabei wird eine Temperatur von neinzig Grad Celsius gehalten. Es entsteht eine luftfreie Dispersion, in dem durch die bereits inaktivierte Lip = Oxygenase keinerlei Fettoxydationsvorgänge mehr anlaufen können, die offenbar den typischen, unerwünschten "bohnigen" Geschmack verursachen. Diese Dispersion wird durch die Injektion von Sattdampf auf einhundertzweiunddreißig Grad Celsius erhitzt und für ca. vierzig Sekunden heißgehalten. Durch die momentartige Aufheizung des Produkts von neunzig auf einhundertzweiunddreißig Grad Celsius ergibt sich eine sehr vorteilhafte Temperaturführung, die zu einer etwa neunzigprozentigen Inaktivierung des Trypsininhibitors bei gleichzeitig weitgehendem Erhalt der Proteinlöslichkeit führt. Die anfänglich höheren pH-Werte in der Aufschlämmung reduzieren sich durch die Dampfinjektion auf Werte kleiner siebeneinhalb so daß eine Aminosäureschädigung vermieden wird. Die überhitzte Dispersion wird nun in ein auf einem Unterdruck gehaltenes Entgasungsgefäß eingebracht und dabei unter Entgasung auf etwa sechszig Grad Celsius abgekühlt. Nach Neutralisierung der Dispersion mittels einer Zitronensäurelösung erfolgt eine einstufige Homogenisierung mit dreihundert bar. Im Anschluß erfolgt eine Diafiltrationsbehandlung, bei der lediglich die Mineralstoffe, löslichen Kohlenhydrate und niedermolekularen Stickstoffverbindungen die Membran passieren, die eine statistische Trenngrenze von Molekulargewicht fünfzig tausend besitzt. Im Verlauf der Filtrationsbehandlung werden bezogen auf einem Gewichtsteil Ausgangssubstrat etwa anderthalb Gewichtsteile Wasser von sechszig Grad Celsius kontinuierlich in das Konzentrat gegeben, wobei nach Abschluß des Vorgangs Konzentratmenge und Menge Ausgangssubstrat identisch sind. Der Anteil an löslichen Kohlenhydraten in der Suspension er niedrigt sich damit etwa auf vierzig Prozent des ursprünglich vorhandenen Wertes.

Anschließend werden die Feststoffe der konzentrierten Suspension mittels eines Klärseparators abgetrennt. Nach Kühlung in einem Plattenwärmeaustauscher erhält man eine bitterstoffreie, weitgehend geruchs- und geschmacksneutrale Sojamilch, die einen Proteingehalt von mindestens fünfzig Prozent in der Trockenmasse und Oligosaccharide lediglich in ernährungsphysiologisch vertretbaren Mengen enthält. Diese eiweißangereicherte Sojamilch weist einen Sedimentgehalt von etwa zehn Volumenprozent auf, dabei besitzen die größten enthaltenen Zellenhautbruchstücke eine Teilchengröße von weniger als zehn Mikrometer. Dadurch wird die Textur als glatt und homogen empfunden.

Ausführungsbeispiel 2:

Eine Sojamilch wird wie in Beispiel 1 beschrieben hergestellt. Die Feststoffe werden mittels einer Kugelmühle auf Teilchengrößenmaxima von sechszig bis achtzig Mikrometer feinstzerkleinert und der Sojamilch mit einem Gewichtsanteil von dreißig Prozent untergemischt. Dadurch ergibt sich eine faserstoffhaltige, hochviskose Sojamilch. Diese Sojamilch weist im vierundzwanzigstündigen Standversuch bei Raumtemperatur noch keine Sedimentation auf.

Ausführungsbeispiel 3:

Eine Dispersion wird wie in Beispiel 1 beschrieben hergestellt. Nach der Entspannungskühlung auf sechzig Grad Celsius erfolgt durch Zusatz einer vorbereiteten Zitronensäurelösung eine Absenkung des pH-Wertes auf dreiein halb. Anschließend erfolgt eine einstufige Homogenisierung mit dreihundert bar, dann die Abtrennung der Feststoffe mittels Klärseparators. Nach Kühlung in einem Plattenwärmeaustauscher erhält man eine saure Sojamilch mit einem Sedimentgehalt von etwa zehn Volumenprozent, die keinerlei Synärese oder Sedimentation aufweist.

**Ansprüche**

1.) Mehrstufiges Verfahren zur Herstellung von Sojamilch aus Sojabohnen beliebiger Gestalt, indem diese mit Wasser von neunzig bis einhundert Grad Celsius blanchiert, das Blanchierwasser von den Bohnen abgetrennt wird, Bohnen in eine alkalische Wasserlösung geleitet und in sofortigem Anschluß zu einer Aufschlämmung vermahlen und fein zerkleinert werden, die Aufschlämmung entgast, durch Injektion von oder Infusion mit Wasserdampf erhitzt, entgast, mit Genußsäure versetzt, zur Suspension feinst zerkleinert wird, diese Suspension diafiltriert und in Feststoffe und Sojamilch getrennt wird, **dadurch gekennzeichnet,** daß die Blanchierdauer höchstens fünf Minuten beträgt, die alkalische Wasserlösung eine Temperatur zwischen neunzig und einhundert Grad Celsius aufweist, die Temperatur während des Vermahlens mindestens neunzig Grad Celsius beträgt und eine halbe bis fünf Minuten konstant gehalten wird, sodaß der Gewichtsanteil der Trockenmasse in der Aufschlämmung zwi schen zehn und sechzehn Teilen vom Hundert liegt, die Entgasung der Aufschlämmung bei einer Temperatur ab neunzig Grad Celsius durchgeführt, die Temperatur der Aufschlämmung durch Injektion von Wasserdampf oder Infusion der aufschlemmung in einer mit Wasserdampf gefüllten Dampfkammer auf einhundertzwanzig bis einhundertfünfzig Grad Celsius erhöht und während fünf bis einhundertachtzig Sekunden konstant gehalten wird, wodurch gleichzeitig der alkalische pH-Wert der Aufschlemmung gemildert wird, nach anschließender Entspannung und Entgasung durch Anlegen eines Unterdrucks bei gleichzeitiger Abkühlung der Aufschlämmung auf eine Temperatur zwischen neunzig und sechzig Grad Celsius eine Genußsäure zugeführt wird, die feinst zerkleinerten Sojabohnenpartikel eine maximale Teilchengröße vom zweihundert Mikrometer aufweisen, durch Diafiltration zehn bis neunzig vom Hundert der löslichen Kohlenhydrate entfernt werden, das Permeat in separierte Sojamilch und einen Restsedimentgehalt, der bis zu dreißig Volumenprozenten Feststoffe ausmacht, getrennt wird, wobei die Feststoffe auf eine Teilchengröße zwischen zwanzig und zweihundert Mikrometer zerkleinert und der geklärten Sojamilch in Gewichtsanteilen von fünf bis fünfzig vom Hundert zugeführt werden können.

2.) Verfahren nach Anspruch 1,**dadurch gekennzeichnet,** daß das während der Diafiltration abfließende Permeat zur Verdünnung der bei der Separierung gewonnenen Feststoffe eingesetzt und erneut separiert wird, wobei das erneut anfallende Permeat dem Mahlprozeß zugeführt wird.

3.) Verfahren nach Ansprüchen 1 oder 2, **dadurch gekennzeichnet,** daß die in der geklärten Sojamilch enthaltenen Faserbestandteile eine Teilchengröße von maximal zehn Mikrometer aufweisen.

4.) Verfahren nach Ansprüchen 1 oder 2, **dadurch gekennzeichnet,** daß die Feinstzerkleinerung zur Suspension vor der Erhitzung auf einhundertzwanzig bis einhundertfünfzig Grad Celsius durchgeführt wird.

5.) Verfahren nach Ansprüchen 1 oder 2, **dadurch gekennzeichnet,** daß die Abtrennung der Sojamilch sowie der Feststoffe nach der Entspannungskühlung erfolgt und die geklärte Sojamilch einer Diafiltrationsbe handlung unterzogen wird.

6.) Verfahren nach Ansprüchen 1 oder 2, **dadurch gekennzeichnet,** daß der pH - Wert der Aufschlämmung nach der Entspannungskühlung durch Zusatz einer Genußsäure auf mindestens 3,7 absenkt, die saure Aufschlämmung zu einer Suspension feinstzerkleinert wird und man über einen Filter oder Separator die Sojamilch sowie die Feststoffe abtrennt.